# NEW EUROPEAN PATENT SPECIFICATION

(11) **EP 1 798 895 B2**
(45) Date of publication and mention of the opposition decision: **06.11.2013**
(45) Mention of the grant of the patent: 09.09.2009
(21) Application number: 06742027.3
(22) Date of filing: 29.05.2006
(51) Int. Cl.: H04L 29/06

(54) **A METHOD AND NETWORK ELEMENT FOR FORWARDING DATA**
VERFAHREN UND NETZWERKELEMENT ZUM WEITERLEITEN VON DATEN
PROCÉDÉ ET ÉLÉMENT DE RÉSEAU DESTINÉ AU TRANSFERT DE DONNÉES

(30) Priority: 08.06.2005 CN 200510075145
(43) Date of publication of application: 20.06.2007
(73) Proprietor: Huawei Technologies Co., Ltd., Longgang District, Shenzhen Guangdong 518129 (CN)
(72) Inventor: LV, Junyang Huawei Administration Building, Shenzhen Guangdong 518129 (CN); YU, Yong Huawei Administration Building, Shenzhen Guangdong 518129 (CN)
(74) Representative: Thun, Clemens
(86) International application number: PCT/CN2006/001139
(87) International publication number: WO 2006/131055

(56) References cited:
- EP-A2- 0 909 061
- WO-A1-01/65777
- DE-T2- 69 319 757
- KR-A1-020050 048 939
- US-A1- 2002 016 874
- US-A1- 2003 206 548
- US-A1- 2004 017 816
- US-A1- 2005 094 649
- US-A1- 2005 094 649
- US-B1- 6 363 077
- US-B1- 6 553 029
- DATABASE NETWORK WORKING GROUP RFC 3768, 01 April 2004 R. HINDEN, ED.: 'Virtual Router Redundancy Protocol'

## Description

### Field of the Invention

The present invention relates to the data transfer technique, and more particularly, to a method and a network element for forwarding data.

### Background of the Invention

With the development of the communication technique, more and more attention is paid to communication bandwidth and forwarding reliability which are provided by a network element of the communication network when the network element forwards data.

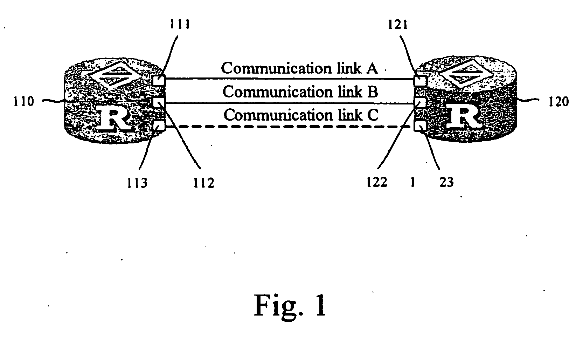

At present, a mode of equivalence route shown in Fig. 1 may be usually applied to guaranteeing that the network element provides enough communication bandwidth and forwarding reliability. As shown in Fig. 1, network element 110 has physical ports 111, 112, and 113. Network element 120 directly connected to network element 110 has physical ports 121, 122, and 123. A unique Internet Protocol (IP) address is allocated for each of the physical ports. Physical port 111 is connected with physical port 121 through communication link A, and physical port 112 is connected with physical port 122 through communication link B.

In normal condition, network element 110 communicates with network element 120 through communication link A and communication link B, for example, network element 110 forwards data to network element 120 through communication link A or B. When there is a failure in either communication link A or communication link B, a great number of data have to be forwarded through a communication link other than both communication link A and communication link B which is not in failure, and when there is a failure in communication link A and communication link B, the data may not be forwarded between network elements 110 and 120. To avoid the cases above, communication link C is established between physical ports 113 and 123 so as to support data forwarding between network elements 110 and 120 when there is a failure in communication link A and/or communication link B.

It can be seen that communication link C can balance the load of data forwarding between network elements 110 and 120 if the data can only be forwarded through communication link A or B because of a failure in either communication link B or communication link A. And communication link C can support the data forwarding between network elements 110 and 120 if the data can not be forwarded through communication link A or B because of the failure in both communication link A and communication link B. Consequently, the reliability of the data forwarding between network elements 110 and 120 is improved because of the introduction of communication link C. Since there is no essential difference between communication link C and communication link A and communication link B, and communication link C can implement the functions above, communication link C is generally called as an equivalence route of communication link A and communication link B.

In actual applications, communication link C may also be established when communication link A and communication link B forward data normally, and forward some data between network elements 110 and 120 so as to reduce the load of communication link A and communication link B. As communication link C is newly added between network elements 110 and 120, the actual entire communication bandwidth for forwarding data between network elements 110 and 120 is increased.

It can be seen from the above that, the mode of equivalence route applied presently may provide the reliability of the data forwarding between two network elements connected directly and increase the communication bandwidth between the two network elements to some extent. However, because IP addresses should be allocated for physical ports 113 and 123 when the equivalence route between network elements 110 and 120 is established, and the total number of IP address is finite, the number of IP addresses is not enough for the mode of equivalence route. Furthermore, it is actually impossible to establish the equivalence route between large numbers of network elements connected directly because a shortage of IP addresses limits the number of equivalence routes to be established.

Further, the number of physical ports of each network element is limited in the existing communication network, and a number of network elements connected directly do not have redundant physical ports in actual applications. As a result, the equivalence route can not be established. That is, even the mode of equivalence route has some disadvantages in improving communication bandwidth and reliability.

With respect to US 2005/094649, it discloses methods, apparatuses and/or systems for logical ports in trunking in which a switch is applied using a structure including a control processor, an ASIC, a PHY, a media interface, a serial interface, a RAM and flash memory. Further, it discloses that the ASIC includes a control subsystem, a frame data storage system, port groupings and an overall system interface. As can be seen, it provides a centralized control structure.

With respect to US 2002/016874, it discloses a structure of an information network using the information relaying apparatuses implementing circuit multiplexing, and the structure of a port management table 80 (See 0066-0069 in combination of figures 7 and 8).

### Summary of the Invention

An embodiment of the present invention provides a method for forwarding data, to improve the communication bandwidth for forwarding data and the forwarding reliability.

In the embodiment, a method for forwarding data includes:
determining, by a line board at a first network element connected with a second network element, an egress port for forwarding the data by using routing information;
determining, by the line board, whether the egress port is a logical port or a physical port, the logical port being created at the first network element, and the logical port being created through
storing, by a main board at the first network element, data information of the logical port, sending the routing information and the data information to the line board where the at least two physical ports are located; and storing, by the line board, the data information and the routing information;
if the egress port is a logical port, choosing, by the line board, one physical port from at least two physical ports of the first network element, and forwarding, by the line board, the data through the chosen physical port, the at least two physical ports being bound with the logical port and connected with the second network element;
If the egress port is a physical port, forwarding, by the line board, the data through the physical port.

Another embodiment of the present invention provides a network element for forwarding data.

The network element for forwarding data includes:
at least one logical port created at a main board and at least two physical ports located at at least one line board, a binding relationship being set between the at least one logical port and each of the at least two physical ports, and the at least two physical ports being connected with one peer network element; and
at least one component at the at least one line board(215) operable for determining an egress port for forwarding the data, determining whether the egress port is a logical port or a physical port; choosing one physical port from the at least two physical ports bound with the logical port and sending the data to be forwarded through the chosen physical port if the egress port is a logical port; and sending the data through the physical port serving as the egress port if the egress port is a physical port.

As can be seen from the embodiments of the present invention, at least one logical port is created at the network element, the logical port is bound with at least two physical ports of one network element, and the physical ports are connected to one peer network element, thus the data to be forwarded can be sent through a physical port bound with the logical port. The communication bandwidth for forwarding data between network elements may be fully and reasonably utilized, which improves the communication bandwidth for forwarding data. Moreover, since the data can be forwarded through any physical port in the normal state among the physical ports bound with the logical port, the reliability for forwarding data between network elements is also improved.

Certain embodiments of the invention may include one, some, or all of the above technical advantages. One or more other technical advantages may be readily apparent to one skilled in the art from the figures, description, and claims included herein.

### Brief Description of the Drawings

Fig. 1 shows the principle of equivalence route in the related art.
Fig. 2 shows the principle of forwarding data according to an embodiment of the present invention.
Fig. 3 is a flowchart of forwarding data relating to in Fig. 2.

### Detailed Description of the Invention

Embodiments of the present invention are described with reference to the accompanying drawings.

The method for forwarding data provided in an embodiment of the present invention includes: creating logical ports respectively at two network elements connected directly, and binding a logical port at each network element with at least two physical ports of one network element which are connected to the other network element; determining, by the network element, an egress port for forwarding the data, and determining whether the egress port is a logical port or a physical port; if the egress port is a logical port, choosing, by the network element, one physical port from the physical ports bound with the logical port, and forwarding the data through the chosen physical port; if the egress port is a physical port, forwarding, by the network element, the data through the physical port serving as the egress port.

The network element for forwarding data provided in an embodiment of the present invention includes at least one logical port bound with at least two physical ports at the network element that are connected to a peer network element. The network element is configured to determine an egress port for forwarding the data, and determine whether the egress port is a logical port or a physical port. If the egress port is a logical port, the network element chooses one physical port from the physical ports bound with the logical port, and forwards the data through the chosen physical port. If the egress port is a physical port, the network element forwards the data through the physical port serving as the egress port.

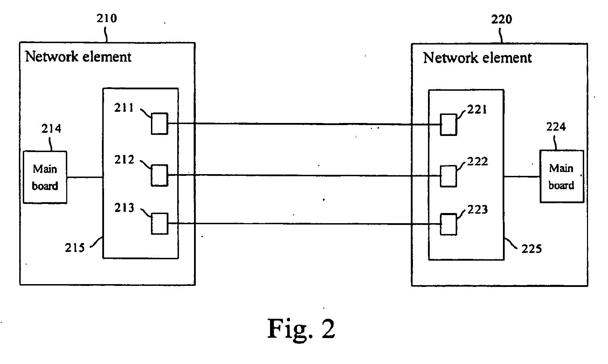

Fig. 2 shows the principle of forwarding data according to an embodiment of the present invention. Network element 210 includes a main board 214 and a line board 215 which is connected to main board 214 and is configured with physical ports 211, 212, and 213. Network element 220 includes a main board 224 and at least one line board such as line board 225 which is connected to main board 224 and is configured with physical ports 221, 222, and 223. Physical port 211 is connected to physical port 221, physical port 212 is connected to physical port 222, and physical port 213 is connected to physical port 223.

A main board is configured to manage a line board connected to the main board to implement such routing operations as forwarding data, for example, run a routing protocol, and collect routes to form and issue routing information to the line board connected to the main board. The main board generally issues the routing information in a routing information table. The line board saves the routing information table from the main board in Forwarding Information Base (FIB) of the line board, and implements such routing operations as data forwarding according to the routing information.

In order to implement data forwarding according to the embodiment of the present invention, at least one logical port is created respectively at main boards 214 and 224, and an IP address is allocated for each logical port created. Supposing that logical port A is created at main board 214 and that logical port B is created at main board 224. Taking main board 214 as an example to describe logical port A created at main board 214.

Logical port A created at main board 214 is a logical entity implemented by a software program containing data information about logical port A. The data information includes a logical port identity, a logical port IP address, a Maximum Transmission Unit (MTU), Multi-Protocol Label Switching (MPLS), Quality of Service (QoS), the number of physical ports bound, identities of physical ports bound, etc. Main board 214 usually saves the data information above in a data structure.

Main board 214 establishes a relationship between the IP address of logical port A and each of the identities of the physical ports bound with logical port A, and sends to line board 215 the IP address of logical port A and the identities of the physical ports which have been established relationship with logical port A. Line board 215 saves the IP address of logical port A and the identities of the physical ports. Line board 215 generally saves the IP address of logical port A and the identities of the physical ports in a data storage device of line board 215 in a form of a physical port member table. Line board 215 may save the IP address of logical port A and the identities of the physical ports in a third party device as long as line board 215 can acquire the IP address of logical port A and the identities of the physical ports from the third party device.

Main board 214 is further configured to send the data information about logical port A to line board 215, and line board 215 saves the data information received.

Main board 214 may establish a relationship between logical port A and each of any two physical ports of physical ports 211, 212 and 213, such that a physical port and logical port A between which the relationship has been established are bound with each other. Main board 214 may also establish a relationship between logical port A and each of physical ports 211, 212 and 213 to make each of the three physical ports and logical port A bound with each other.

Similar to logical port A created at main board 214, logical port B created at main board 224 is also a logical entity implemented by a software program containing data information about logical port B.

Main board 224 establishes a relationship between the IP address of logical port B created at main board 224 and each of the identities of the physical ports bound with logical port B, and sends to line board 225 the IP address of logical port B and the identities of the physical ports. Line board 225 saves the IP address of logical port B and the identities of the physical ports. Line board 225 generally saves the IP address of logical port B and the identities of physical ports in a data storage device of line board 225 in a form of the physical port member table. Line board 225 can also save the IP address of logical port B and the identities of the physical ports in a third party device as long as line board 225 can acquire the IP address of logical port B and the identities of the physical ports from the third party device.

Main board 224 is further configured to send the data information about logical port B to line board 225, and line board 225 saves the data information received in a data structure.

Main board 224 may establish a relationship between logical port B and each of two physical ports of physical ports 221, 222 and 223 to make a physical port and logical port B between which the relationship has been established bound with each other. Main board 224 may also establish a relationship between logical port B and each of physical ports 221, 222 and 223 to make logical port B and each of the three physical ports bound with each other.

In actual applications, no matter which physical ports are bound with the logical ports at network elements 210 and 220 respectively, it must be guaranteed that the physical ports at network element 220 which are connected to the physical ports bound with one logical port at network element 210 are also bound with one logical port at network element 220. For instance, when logical port A created at network element 210 is bound with physical ports 211 and 212, logical port B created at network element 220 should be bound with physical ports 221 and 222. When logical port A created at network element 210 is bound with physical ports 211, 212 and 213, logical port B created at network element 220 should be bound with physical ports 221, 222 and 223.

In addition, one physical port can only be bound with only one logical port instead of being bound with two or more logical ports.

Supposing that logical port A created at network element 210 is bound with physical ports 211, 212 and 213 and that logical port B created at network element 220 is bound with physical ports 221, 222 and 223.

Under this condition, since logical ports have been created at both main board 214 at network element 210 and main board 224 at network element 220, main board 214 needs to notify the line board where the physical ports bound with logical port A are located of such routing information as the IP address of logical port A newly created at main board 214, and manages the line board to update an FIB saved in the line board. Similarly, main board 224 also needs to notify the line board where the physical ports bound with logical port B are located of routing information of logical port B newly created at main board 224, and manages the line board to update an FIB saved in the line board.

The operations of notifying and updating are described below.

Main board 214 sends such routing information as the IP address of logical port A newly created at main board 214 to line board 215, and line board 215 saves the routing information received, e.g. saves the routing information received in the FIB of line board 215. When updating the FIB, for example, deleting the information in the FIB, main board 214 sends to line board 215 a deleting command including the IP addresses of physical ports 211, 212 and 213, upon receiving the deleting command, line board 215 deletes routing information related to physical ports 211, 212 and 213 stored in the FIB of line board 215.

Similarly, main board 224 sends such routing information as the IP address of logical port B newly created at main board 224 to line board 225, and line board 225 saves the routing information received, e.g. saves the routing information received in the FIB of line board 225. When updating the FIB, for example, deleting the information in the FIB, main board 224 sends to line board 225 a deleting command including the IP addresses of physical port 221, 222, and 223, upon receiving the deleting command, line board 225 deletes routing information related to physical ports 221, 222 and 223 stored in the FIB of line board 225.

During the operations of notifying and updating described above, network elements 210 and 220 update routing information between each other adopting such an existing routing protocol as Open Shortest Path First (OSPF). Network element 210 thus learns that logical port A of network element 210 is connected to logical port B of network element 220. Similarly, network element 220 learns that logical port B of network element 220 is connected to logical port A of network element 210.

By far, when receiving a datagram through a physical port of line board 215, line board 215 of network element 210 obtains a destination address in the datagram, and searches the FIB of line board 215 for an IP address of the egress port corresponding to the destination address. Alternatively, line board 215 may generate a datagram to be forwarded according to user data received, and the datagram generated also includes the destination address. In the latter case, line board 215 obtains the destination address in the datagram generated, and searches the FIB of line board 215 for an IP address of the egress port corresponding to the destination address.

Line board 215 then determines whether the egress port corresponding to the IP address is a logical port, and the determining generally includes the following processes. Line board 215 searches for the identity of the logical port from the data information saved by line board 215 for describing the port of the IP address. If the identity of the logical port is found, line board 215 determines that the egress port is a logical port; otherwise, line board 215 determines that the egress port is not a logical port.

If determining that the egress port is a logical port, line board 215 searches the physical port member table stored in line board 215 for IP addresses of physical ports corresponding to the IP address of the egress port, chooses an IP address from the found IP addresses of physical ports, and sends the datagram through the physical port corresponding to the IP address chosen. That is, choose one physical port from the multiple physical ports bound with the logical port to send the datagram through the chosen physical port. Specifically, the searching or HASH algorithm may be used to choose the physical port so as to balance the data amount sent through each physical port bound with the logical port.

If line board 215 determines that the egress port is not a logical port, it can be determined that the egress port is a physical port. So, line board 215 directly sends the datagram through the physical port corresponding to the IP address, i.e, the egress port.

There are various HASH algorithms, such as source/destination address HASH, protocol type HASH, etc. The source/destination address HASH is generally implemented as described below. Supposing that the identity of physical port 211 is 0, the identity of physical port 212 is 1, and the identity of physical port 213 is 2. Then the source and destination addresses in the datagram to be forwarded are converted to a numeral which is divided by the number of the physical ports bound with the logical port. The remainder of the division must be 0, 1, or 2. If the remainder is 0, the datagram is forwarded through physical port 211 of which the identity is 0.

The protocol type HASH is generally implemented as described below. Configure in advance a relationship between a protocol type and a physical port, for example, datagram of which the protocol type is A corresponds to physical port 211; datagram of which the protocol type is B corresponds to physical port 212; and datagram of which the protocol type is C corresponds to physical port 213. Thus, during the follow-up process of forwarding datagram, line board 215 reads the data description related with the protocol type in the datagram to be forwarded, determines the protocol type adopted by the datagram, and sends the datagram through the physical port corresponding to the protocol type.

The forgoing describes the method for line board 215 forwarding a datagram. The method of line board 225 at network element 220 forwarding a datagram is the same as that of line board 215.

Additionally, physical ports bound with a logical port may be distributed on multiple line boards, for instance, physical ports bound with logical port X are located at line boards Y and Z. Therefore, if the physical port chosen by line board Y is located at line board Z, line board Y sends to line board Z a forwarding message including both the data to be forwarded and the identity of the physical port through an inner communication bus. Upon receiving the forwarding message, line board Z forwards the data included in the forwarding message through line board Z's physical port corresponding to the identity of the physical port included in the forwarding message.

In actual applications, one or more of physical ports 211, 212 and 213 bound with logical port A may be in failure, resulting in abnormal communication. Through adopting the method for forwarding data mentioned above, line board 215 may still forward the data to be forwarded through the physical port which is in failure, which will lead to the failure of forwarding the data. Thus, main board 214 may be further configured to acquire states of the physical ports bound with logical port A at line board 215. For example, line board 215 reports the states of physical ports bound with logical port A to main board 214 in real time or periodically. For another example, main board 214 sends a port state report command to line board 215 in real time or periodically, and line board 215 reports the states of the physical ports bound with logical port A upon receiving the port state report command. The states of the physical ports include a normal state and an abnormal state.

Upon receiving the states of the physical ports from line board 215, main board 214 issues the identities of the physical ports in the normal state to line board 215 where the physical ports bound with logical port A are located. Line board 215 updates, according to the identities of physical ports received, the identities of physical ports corresponding to the IP address of logical port A in the physical port member table stored in line board 215.

It can be assured that, during the follow-up process of line board 215 forwarding a datagram, the datagram is forwarded through a physical port chosen from the physical ports which are bound with logical port A and are in the normal state. Main board 214 may be further configured with a security forwarding threshold. When determining, according to the states of physical ports from line board 215, that the number of the physical ports in the normal state is smaller than the security forwarding threshold, main board 214 forwards to line board 215 a forwarding stop command including the IP address of logical port A. Upon receiving the forwarding stop command, line board 215 deletes the IP address of logical port A and the identities of physical ports corresponding to the IP address of logical port A stored in the physical port member table of line board 215. Thus, none of the physical ports bound with logical port A can forward the data.

Similarly, the operations according to the states of physical ports are also applicable to network element 220.

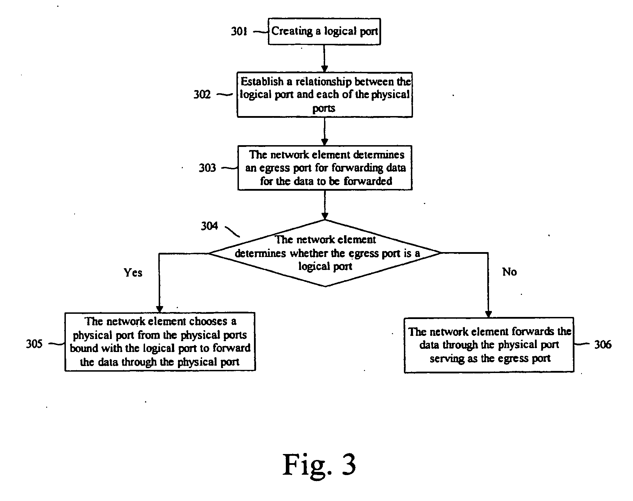

Fig. 3 is a flowchart illustrating data forwarding in Fig. 2, mainly including the following processes.

Step 301: create a logical port at a main board of a network element.

Step 302: create a relationship between the logical port and a physical port to be bound with the logical port, and the IP address of the logical port and the identity of the physical port are issued to a line board where the physical port is located; and the line board stores the IP address of the logical port and the identity of the physical port.

Step 303: before forwarding a datagram, the line board reads the destination address in the datagram, and searches for an IP address of the egress port corresponding to the destination address in the FIB stored in the line board.

Step 304: the line board determines whether the egress port corresponding to the IP address of the egress port is a logical port; if the egress port corresponding to the IP address of the egress port is a logical port, perform Step 305; otherwise, perform Step 306.

Step 305: the line board chooses one physical port from multiple physical ports bound with the logical port, sends the datagram through the chosen physical port, and terminates the process.

Step 306: the line board directly forwards the datagram through the physical port corresponding to the IP address of the egress port.

The method for forwarding data provided by the embodiments of the present invention is applicable to various physical ports and transfer links used currently, such as Packet Over Synchronous Digital Hierarchy (SDH)/Synchronous Optical Network (SONET) (POS) ports and POS links. The network element mentioned above is generally a communication device for data forwarding, such as a router, etc. Additionally, there may be a communication apparatus between two network elements connected directly to implement other processing for the data besides forwarding.

It can be seen from the above that, according to the method and the network element for forwarding data, with multiple physical ports bound together, the data may be forwarded through any physical port in the normal state among the multiple physical ports, which obviously improves the reliability for forwarding the data by the network element. Moreover, the communication bandwidth for forwarding the data by the network element is used fully and reasonably through binding multiple physical ports and choosing a physical port according to the searching algorithm, the HASH algorithm etc, the communication bandwidth for forwarding the data by the network element is improved greatly.

The foregoing descriptions are only preferred embodiments of the present invention and are not for use in limiting the protection scope thereof. All the modifications, equivalent replacements or improvements in the scope of the present invention shall be included in the protection scope of the present invention.

## Claims

1. A method for forwarding data, **characterized by** comprising:
determining, by a line board at a first network element connected with a second network element, an egress port for forwarding the data by using routing information(303);
determining, by the line board, whether the egress port is a logical port or a physical port(304), wherein the logical port is created at the first network element(301), and the logical port is created through
storing, by a main board at the first network element, data information of the logical port including a logical port Internet Protocol (IP) address and a logical port identity (ID), sending the routing information including the logical port Internet Protocol (IP) address and the data information to the line board where at least two physical ports are located; storing, by the line board, the data information and the routing information;
if the egress port is a logical port, choosing, by the line board, one physical port from the at least two physical ports of the first network element, and forwarding, by the line board, the data through the chosen physical port(305) and terminating the process of forwarding the data, wherein the at least two physical ports of the first network element are bound with the logical port and connected with the second network element(302);
if the egress port is a physical port, forwarding, by the line board, the data through the physical port(306).

2. The method of Claim 2, wherein the at least two physical ports are bound with the logical port through
establishing, by the main board, a relationship between an internet Protocol (IP) address of the logical port contained in the data information and each of identities of the at least two physical ports, sending the relationship to a line board where the at least two physical ports are located; and
storing, by the line board receiving the relationship, the IP address of the logical port and the identities of the at least two physical ports corresponding to the IP address of the logical port.

3. The method of Claim 1 or 2, wherein the process of choosing one physical port from the at least two physical ports bound with the logical port comprises:
choosing, by a line board for forwarding the data, one physical port by searching the at least two physical ports bound with the logical port one by one; or
choosing, by the line board for forwarding the data, one physical port from the at least two physical ports bound with the logical port by using a source/destination address HASH algorithm; or
choosing, by the line board for forwarding the data, one physical port from the at least two physical ports bound with the logical port by using a protocol type HASH algorithm.

4. The method of Claim 3, wherein the chosen physical port is located at the line board for forwarding the data at the first network element; and the line board forwards the data through the chosen physical port.

5. The method of Claim 3, wherein the chosen physical port is located at a line board at the first network element other than the line board for forwarding the data; and the process of forwarding the data through the chosen physical port comprises:
sending, by the line board for forwarding the data, to the line board where the chosen physical port is located a forwarding message containing the data; and
sending, by the line board where the chosen physical port is located, the data contained in the forwarding message through the chosen physical port.

6. The method of Claim 1, 2, 4, or 5, wherein the process of determining the egress port for forwarding the data comprises:
reading a destination address contained in the data, searching for an egress port address corresponding to the destination address in the routing information stored in the first network element, and determining an egress port through which the data is to be forwarded according to the egress port address.

7. The method of Claim 1, 2, 4, 5, or 6, wherein the process of determining whether the egress port is a logical port or a physical port comprises:
searching, by the line board for forwarding the data, for an identity of the logical port in the data information of the egress port stored in the line board;
if the identity of the logical port is found, determining that the egress port is a logical port;
otherwise, determining that the egress port is a physical port.

8. The method of Claim 1, further comprising:
obtaining states of the at least two physical ports bound with the logical port, sending an identity of a physical port in a normal state to the line board where the at least two physical ports are located;
updating, by the line board, identities of the at least two physical ports bound with the logical port using the identity of the physical port in a normal state.

9. The method of Claim 8, further comprising:
when the number of the at least two physical ports bound with the logical port in the normal state is smaller than a security forwarding threshold, sending to the line board where the at least two physical ports are located a forwarding stop command containing an IP address of the logical port; and
reading, by the line board receiving the forwarding stop command, the IP address of the logical port contained in the forwarding stop command, and deleting the IP address of the logical port and the identities of the at least two physical ports bound with the logical port stored in the line board.

10. A network element for forwarding data, **characterized by** comprising:
at least one logical port created at a main board(214) and at least two physical ports(211, 212, 213) located at at least one line board(215); wherein a binding relationship is set between the at least one logical port and each of the at least two physical ports, and the at least two physical ports are connected with one peer network element; and
a component at the at least one line board(215) operable for determining an egress port for forwarding the data, determining whether the egress port is a logical port or a physical port; choosing one physical port from the at least two physical ports bound with the logical port and sending the data to be forwarded through the chosen physical port if the egress port is a logical port; and sending the data through the physical port serving as the egress port if the egress port is a physical port; wherein, the main board is configured to store data information of the logical port including a logical port Internet Protocol (IP) address and a logical port identity (ID) and to send the routing information including the logical port Internet Protocol (IP) address and the data information to the at least one line board; the at least one line board is configured to store the data information and the routing information.

11. The network element of Claim 10, wherein
the binding relationship between the at least one logical port and each of the at least two physical ports(211, 212, 213) is stored at the line board(215).

12. The network element of Claim 10 or 11, wherein the at least two physical ports(211, 212, 213) bound with the logical port are distributed at one line board or at different line boards.

13. The network element of Claim 12, wherein the at least one component is at the line board where the at least two physical ports(211, 212, 213) of the network element are located.

## Patentansprüche

1. Verfahren zum Weiterleiten von Daten, **dadurch gekennzeichnet, dass** es umfasst:
Bestimmen eines Ausgangsanschlusses durch eine Leitungskarte in einem ersten Netzwerkelement, das mit einem zweiten Netzwerkelement verbunden ist, um die Daten unter Verwendung einer Routing-Information weiterzuleiten (303); Bestimmen durch die Leitungskarte, ob der Ausgangsanschluss ein Logik-Port oder ein physischer Port ist (304), wobei der Logik-Port in dem ersten Netzwerkelement geschaffen wird (301) und der Logik-Port geschaffen wird durch
Speichern von Dateninformation des Logik-Ports durch eine Hauptplatine in dem ersten Netzwerkelement, einschließlich einer Logik-Port-Internet-Protokoll-Adresse, IP-Adresse, und einer Logik-Port-Identität (ID), Senden der Routing-Information einschließlich der Logik-Port-Internet-Protokoll-Adresse, IP-Adresse, und der Dateninformation an die Leitungskarte, auf der zumindest zwei physische Ports lokalisiert sind; Speichern der Dateninformation und der Routing-Information durch die Leitungskarte;
falls der Ausgangsanschluss ein Logik-Port ist, Auswählen von einem physischen Port der zumindest zwei physischen Ports des ersten Netzwerkelements durch die Leitungskarte und Weiterleiten der Daten durch die Leitungskarte durch den ausgewählten physischen Port (305) und Beenden des Prozesses des Weiterleitens der Daten, wobei die zumindest zwei physischen Ports des ersten Netzwerkelements mit dem Logik-Port verknüpft und mit dem zweiten Netzwerkelement verbunden sind (302);
falls der Ausgangsanschluss ein physischer Port ist, Weiterleiten der Daten durch die Leitungskarte durch den physischen Port (306).

2. Verfahren nach Anspruch 1, wobei die zumindest zwei physischen Ports mit dem Logik-Port verknüpft sind durch
Aufbauen einer Verknüpfung durch die Hauptplatine zwischen einer Internet Protokoll-Adresse, IP-Adresse, des Logik-Ports, die in der Dateninformation enthalten ist, und jeder der Identitäten der zumindest zwei physischen Ports, Senden der Verknüpfung an eine Leitungskarte, auf der zumindest zwei physische Ports lokalisiert sind; und
Speichern der IP-Adresse des Logik-Ports und der Identitäten der zumindest zwei physischen Ports, die mit der IP-Adresse des Logik-Ports korrespondieren, durch die Leitungskarte, die die Verknüpfung empfängt.

3. Verfahren nach Anspruch 1 oder 2, wobei der Vorgang des Auswählens eines physischen Ports aus den zumindest zwei physischen Ports, die mit dem Logik-Port verknüpft sind, umfasst:
Auswählen eines physischen Ports durch eine Leitungskarte zum Weiterleiten der Daten, indem die zumindest zwei physischen Ports nacheinander durchsucht werden, die mit dem Logik-Port verknüpft sind; oder
Auswählen eines physischen Ports aus den zumindest zwei physischen Ports, die mit dem Logik-Port verknüpft sind, durch die Leitungskarte zum Weiterleiten der Daten, indem ein Quellen-/Ziel-Adressen-HASH-Algorithmus verwendet wird; oder
Auswählen eines physischen Ports aus den zumindest zwei physischen Ports, die mit dem Logik-Port verknüpft sind, durch die Leitungskarte zum Weiterleiten der Daten, indem ein HASH-Algorithmus eines Protokoll-Typs verwendet wird.

4. Verfahren nach Anspruch 3, wobei der ausgewählte physische Port auf der Leitungskarte zum Weiterleiten der Daten des ersten Netzwerkelements lokalisiert ist; und die Leitungskarte die Daten durch den ausgewählten physischen Port weiterleitet.

5. Verfahren nach Anspruch 3, wobei der ausgewählte physische Port auf einer anderen Leitungskarte des ersten Netzwerkelements als der Leitungskarte zum Weiterleiten der Daten lokalisiert ist; und der Vorgang des Weiterleitens der Daten durch den ausgewählten physischen Port umfasst:
Senden durch die Leitungskarte zum Weiterleiten der Daten an die Leitungskarte, auf der der ausgewählte physische Port lokalisiert ist, einer Weiterleitungsmeldung, die die Daten enthält; und
Senden der Daten, die in der Weiterleitungsmeldung enthalten sind, durch die Leitungskarte, auf der der ausgewählte physische Port lokalisiert ist, durch den ausgewählten physischen Port.

6. Verfahren nach Anspruch 1, 2, 4 oder 5, wobei der Vorgang des Bestimmens des Ausgangsanschlusses zum Weiterleiten der Daten umfasst:
Auslesen einer Zieladresse, die in den Daten enthalten ist, Suchen einer Ausgangsanschlussadresse, die mit der Zieladresse korrespondiert, in der Routing-Information, die in dem ersten Netzwerkelement gespeichert ist, und Bestimmen eines Ausgangsanschlusses, durch den die Daten gemäß der Ausgangsanschlussadresse weitergeleitet werden sollen.

7. Verfahren nach Anspruch 1, 2, 4, 5 oder 6, wobei der Vorgang des Bestimmens, ob der Ausgangsanschluss ein Logik-Port oder ein physischer Port ist, umfasst:
Suchen nach einer Identität des Logik-Ports durch die Leitungskarte zum Weiterleiten der Daten in der Dateninformation des Ausgangsanschlusses, die in der Leitungskarte gespeichert ist;
falls die Identität des Logik-Ports gefunden wird, Bestimmen, dass der Ausgangsanschluss ein Logik-Port ist;
andernfalls Bestimmen, dass der Ausgangsanschluss ein physischer Port ist.

8. Verfahren nach Anspruch 1, ferner umfassend:
Erhalten von Status der zumindest zwei physischen Ports, die mit dem Logik-Port verknüpft sind, Senden einer Identität eines physischen Ports in einem Normal-Status an die Leitungskarte, auf der die zumindest zwei physischen Ports lokalisiert sind;
Aktualisieren der Identitäten der zumindest zwei physischen Ports, die mit dem Logik-Port verknüpft sind, durch die Leitungskarte unter Verwendung der Identität des physischen Ports in einem Normal-Status.

9. Verfahren nach Anspruch 8, ferner umfassend:
wenn die Anzahl der zumindest zwei physischen Ports, die mit dem Logik-Port verknüpft sind, in dem Normal-Status kleiner ist als ein Sicherheits-Weiterleitungsgrenzwert, Senden an die Leitungskarte, auf der die zumindest zwei physischen Ports lokalisiert sind, eines Weiterleitungs-Abbruchbefehls, der die IP-Adresse des Logik-Ports enthält; und
Auslesen der IP-Adresse des Logik-Ports, die in dem Weiterleitungs-Abbruchbefehl enthalten ist, durch die Leitungskarte, die den Weiterleitungs-Abbruchbefehl empfängt, und Löschen der IP-Adresse des Logik-Ports und der Identitäten der zumindest zwei physischen Ports, die mit dem Logik-Port verknüpft sind, die in der Leitungskarte gespeichert sind.

10. Netzwerkelement zum Weiterleiten von Daten, **dadurch gekennzeichnet, dass** es umfasst:
zumindest einen Logik-Port, der auf einer Hauptplatine (214) geschaffen ist, und
zumindest zwei physische Ports (211, 212, 213), die auf zumindest einer Leitungskarte (215) lokalisiert sind; wobei eine Verknüpfung zwischen dem zumindest einen Logik-Port und jedem der zumindest zwei physischen Ports eingerichtet ist, und die zumindest zwei physischen Ports mit einem Peer-Netzwerkelement verbunden sind; und
ein Bauteil auf der zumindest einen Leitungskarte (215), das betreibbar ist, einen Ausgangsanschluss zum Weiterleiten der Daten zu bestimmen, und zu bestimmen, ob der Ausgangsanschluss ein Logik-Port oder ein physischer Port ist; einen physischen Port aus den zumindest zwei physischen Ports auszuwählen, die mit dem Logik-Port verknüpft sind, und die Daten, die weitergeleitet werden sollen, durch den ausgewählten physischen Port zu senden, falls der Ausgangsanschluss ein Logik-Port ist; und die Daten durch den physischen Port zu senden, der als der Ausgangsanschluss dient, falls der Ausgangsanschluss ein physischer Port ist, wobei die Hauptplatine dafür ausgelegt ist, Dateninformationen des Logik-Ports, einschließlich einer Internet-Protokoll-Adresse, IP-Adresse, des Logik-Ports und einer Identität (ID) des Logik-Ports, zu speichern und die Routing-Informationen, einschließlich der Internet-Protokoll-Adresse, IP-Adresse, des Logik-Ports und der Dateninformationen zu der mindestens einen Leitungskarte zu senden; wobei die mindestens eine Leitungskarte dafür ausgelegt ist, die Dateninformationen und die Routing-Informationen zu speichern.

11. Netzwerkelement nach Anspruch 10, wobei
die Verknüpfung zwischen dem zumindest einen Logik-Port und jedem der zumindest zwei physischen Ports (211, 212, 213) auf der Leitungskarte (215) gespeichert ist.

12. Netzwerkelement nach Anspruch 10 oder 11, wobei die zumindest zwei physischen Ports (211, 212, 213), die mit dem Logik-Port verknüpft sind, über eine Leitungskarte oder über verschiedene Leitungskarten verteilt sind.

13. Netzwerkelement nach Anspruch 12, wobei das zumindest eine Bauteil auf der Leitungskarte vorliegt, auf der die zumindest zwei physischen Ports (211, 212, 213) des Netzwerkelements lokalisiert sind.

## Revendications

1. Procédé pour acheminer des données, **caractérisé en ce qu'**il comporte les étapes ci-après consistant à :
déterminer, par le biais d'une carte de ligne au niveau d'un premier élément de réseau connecté à un second élément de réseau, un port de sortie destiné à acheminer les données en utilisant des informations d'acheminement (303) ;
déterminer, par le biais de la carte de ligne, si le port de sortie est un port logique ou un port physique (304), lequel port logique est créé au niveau d'un premier élément de réseau (301), et lequel port logique est créé par le biais des étapes consistant à stocker, par le biais d'une carte principale au niveau du premier élément de réseau, des informations de données du port logique comprenant une adresse de Protocole Internet (IP) de port logique et une identité (ID) de port logique, envoyer les informations d'acheminement comprenant l'adresse de Protocole Internet (IP) de port logique et les informations de données à la carte de ligne où sont situés au moins deux ports physiques ; stocker, par le biais de la carte de ligne, les informations de données et les informations d'acheminement ;
si le port de sortie est un port logique, sélectionner, par le biais de la carte de ligne, un port physique parmi lesdits au moins deux ports physiques du premier élément de réseau, et acheminer, par le biais de la carte de ligne, les données à travers le port physique sélectionné (305) et mettre fin à l'étape consistant à acheminer les données, lesquels au moins deux ports physiques du premier élément de réseau sont liés au port logique et connectés au second élément de réseau (302) ;
si le port de sortie est un port physique, acheminer, par le biais de la carte de ligne, les données à travers le port physique (306).

2. Procédé selon la revendication 1, dans lequel lesdits au moins deux ports physiques sont liés au port logique par le biais des étapes consistant à
établir, par le biais de la carte principale, une relation entre une adresse de Protocole Internet (IP) du port logique contenue dans les informations de données et chacune des identités desdits au moins deux ports physiques, envoyer la relation à une carte de ligne où lesdits au moins deux ports physiques sont situés ; et
stocker, par le biais de la carte de ligne recevant la relation, l'adresse IP du port logique et les identités desdits au moins deux ports physiques correspondant à l'adresse IP du port logique.

3. Procédé selon la revendication 1 ou 2, dans lequel l'étape consistant à sélectionner un port physique parmi lesdits au moins deux ports physiques liés au port logique comporte les étapes ci-dessous consistant à :
sélectionner, par le biais d'une carte de ligne destinée à acheminer les données, un port physique en recherchant lesdits au moins deux ports physiques liés au port logique un à un, ou
sélectionner, par le biais de la carte de ligne destinée à acheminer les données, un port physique parmi lesdits au moins deux ports physiques liés au port logique en faisant appel à un algorithme de HACHAGE d'adresse de destination / adresse source ; ou
sélectionner, par le biais de la carte de ligne destinée à acheminer les données, un port physique parmi lesdits au moins deux ports physiques liés au port logique en utilisant un algorithme de HACHAGE de type protocole.

4. Procédé selon la revendication 3, dans lequel le port physique sélectionné est situé au niveau de la carte de ligne destinée à acheminer les données au niveau du premier élément de réseau ; et la carte de ligne achemine les données à travers le port physique sélectionné.

5. Procédé selon la revendication 3, dans lequel le port physique sélectionné est situé au niveau d'une carte de ligne au niveau du premier élément de réseau différente de la carte de ligne d'acheminement des données ; et l'étape consistant à sélectionner les données à travers le port physique sélectionné comprend les étapes ci-dessous consistant à :
envoyer, par le biais de la carte de ligne destinée à acheminer des données, à la carte de ligne où le port physique sélectionné est situé, un message d'acheminement contenant les données ; et
envoyer, par le biais de la carte de ligne où le port physique sélectionné est situé, les données contenues dans le message d'acheminement par le biais du port physique sélectionné.

6. Procédé selon la revendication 1, 2, 4 ou 5, dans lequel l'étape consistant à déterminer le port de sortie destiné à acheminer des données comporte les étapes consistant à :
lire une adresse de destination contenue dans les données, rechercher une adresse de port de sortie correspondant à l'adresse de destination dans les informations d'acheminement stockées dans le premier élément de réseau, et déterminer un port de sortie à travers lequel les données doivent être acheminées selon l'adresse de port de sortie.

7. Procédé selon la revendication 1, 2, 4, 5 ou 6, dans lequel l'étape consistant à déterminer si le port de sortie est un port logique ou un port physique comprend les étapes ci-dessous consistant à :
rechercher, par le biais de la carte de ligne destinée à acheminer des données, une identité du port logique dans les informations de données du port de sortie stockées dans la carte de ligne ;
si l'identité du port logique est trouvée, déterminer que le port de sortie est un port logique ;
sinon, déterminer que le port de sortie est un port physique.

8. Procédé selon la revendication 1, comprenant en outre les étapes ci-dessous consistant à :
obtenir des états desdits au moins deux ports physiques liés au port logique, envoyer une identité d'un port physique dans un état normal à la carte de ligne où lesdits au moins deux ports physiques sont situés ;
mettre à jour, par le biais de la carte de ligne, des identités desdits au moins deux ports physiques liés au port logique en utilisant l'identité du port physique dans un état normal.

9. Procédé selon la revendication 8, comprenant en outre les étapes ci-dessous consistant à :
lorsque le nombre desdits au moins deux ports physiques liés au port logique dans l'état normal est inférieur à un seuil de sécurité d'acheminement, envoyer à la carte de ligne où lesdits au moins deux ports physiques sont situés, une commande d'arrêt d'acheminement contenant une adresse IP du port logique ; et
lire, par le biais de la carte de ligne recevant la commande d'arrêt d'acheminement, l'adresse IP du port logique contenue dans la commande d'arrêt d'acheminement, et supprimer l'adresse IP du port logique et les identités desdits au moins deux ports physiques liés au port logique stockées dans la carte de ligne.

10. Élément de réseau destiné à acheminer des données, **caractérisé en ce qu'**il comporte :
au moins un port logique créé au niveau d'une carte principale (214) et au moins deux ports physiques (211, 212, 213) situés au niveau d'au moins une carte de ligne (215) ;
une relation de lien étant définie entre ledit au moins un port logique et chacun desdits au moins deux ports physiques, et lesdits au moins deux ports physiques étant connectés à un élément de réseau homologue ; et
un composant au niveau de ladite au moins une carte de ligne (215) exploitable pour déterminer un port de sortie destiné à acheminer des données, déterminer si le port de sortie est un port logique ou un port physique ; sélectionner un port physique parmi lesdits au moins deux ports physiques liés au port logique et envoyer les données à acheminer par le biais du port physique sélectionné si le port de sortie est un port logique ; et envoyer les données par le biais du port physique servant de port de sortie si le port de sortie est un port physique ;
la carte principale étant configurée pour stocker des informations de données du port logique comprenant une adresse de Protocole Internet (IP) de port logique et une identité (ID) de port logique et pour envoyer les informations d'acheminement comprenant l'adresse de Protocole Internet (IP) de port logique et les informations de données à ladite au moins une carte de ligne ; ladite au moins une carte de ligne étant configurée pour stocker les informations de données et les informations d'acheminement.

11. Élément de réseau selon la revendication 10, dans lequel
la relation de lien entre ledit au moins un port logique et chacun desdits au moins deux ports physiques (211, 212, 213) est stockée au niveau de ladite au moins une carte de ligne (215).

12. Élément de réseau selon la revendication 10 ou 11, dans lequel lesdits au moins deux ports physiques (211, 212, 213) liés au port logique sont distribués au niveau d'une carte de ligne ou au niveau de carte de lignes différentes.

13. Élément de réseau selon la revendication 12, dans lequel ledit au moins un composant se situe au niveau de la carte de ligne où lesdits au moins deux ports physiques (211, 212, 213) de l'élément de réseau sont situés.
